# FASCICULE DE BREVET EUROPEEN

(11) **EP 0 480 842 B1**
(45) Date de publication et mention de la délivrance du brevet: **01.03.1995**
(21) Numéro de dépôt: 91402729.7
(22) Date de dépôt: 11.10.1991
(51) Int. Cl.: H04M 1/00

(54) **Poste téléphonique à puce unique programmable**
Fernsprechapparat mit einem einzigen programmierbaren Chip
Telephone set with a single programmable chip

(30) Priorité: 11.10.1990 FR 9012564
(43) Date de publication de la demande: 15.04.1992
(73) Titulaire: MATRA COMMUNICATION, 29101 Quimper (FR)
(72) Inventeur: Rolland, Robert, F-78390 Bois d'Arcy (FR)
(74) Mandataire: Fruchard, Guy

(56) Documents cités:
- 32TH IEEE INTERNATIONAL SOLID STATE CIRCUITS CONFERENCE vol. S. 17, 17Février 1989, NEW YORK pages 254 - 255; NGUYEN ET AL: 'A SINGLE CHIP BIMOSTELEPHONE SET'
- ELECTRONIC DESIGN vol. 31, no. 5, 3 Mars 1983,HASBROUCK HEIGHTS , NEW JERSEY pages 113 - 118; R. ALLAN: 'DENSITY COMPLEXITYOF COMMUNICATION CHIPS CONTINUE THEIR CLIMB'
- IEEE JOURNAL OF SOLID-STATE CIRCUITS vol. 24, no. 3, Juin 1989, NEW YORK, pages 681-685; Moons et al.: "Fully Integrated Analog Telephone"
- ERICSSON REVIEW vol. 62, no. 3, 1985, STOCKHOLMSE pages 138 - 143; BERG: 'ALL TELEPHONE FUNCTIONS IN ONE CHIP PBL 3780'
- ELECTRONICS, vol. 59, no. 33, Octobre 1986,NEW YORK pages 135 - 136; ROSENBERG: 'MITEL FITS SPEAKERPHONE ON ONE ISDN PHONECHIP'
- PATENT ABSTRACTS OF JAPAN vol. 8, no. 21 (E-224)(1458) 28Janvier 1984 & JP-A-58 182 940 ( NIPPON DENSHIN DENWA KOSHA ) 26 Octobre 1983

## Description

La présente invention concerne un poste téléphonique.

On connait par exemple de la publication 32 th IEEE International Solid State Conférence, vol. S. 17, 17-02-89, New-York p. 254-255, NGUYEN et al : 'A Single Chip Bimos Telephone Set'. des postes téléphoniques comportant un clavier, un interface de clavier, un écouteur, un micro, un transmetteur, un récepteur, un organe de numérotation, un organe de gestion interne, des organes d'adaptation de paramètres externes, et des filtres et constantes de temps, dans lesquels certains éléments, notamment l'organe de numérotation, l'organe de gestion interne et certains éléments du transmetteur et du récepteur sont intégrés dans une puce associée à des composants périphériques pour réaliser notamment les filtres, les constantes de temps et l'adaptation aux paramètres externes en fonction d'une application. Le nombre important de composants périphériques implique un nombre élevé de broches de la puce pour le raccordement de celle-ci aux composants périphériques. De plus, l'utilisation de composants périphériques spécifiques pour chaque application limite considérablement la flexibilité d'usage d'un poste téléphonique donné dans des réseaux ayant différentes conformations.

Selon l'invention, on prévoit un poste téléphonique du type précité dans lequel le transformateur, le récepteur, l'organe de numérotation, l'organe de gestion interne, un organe de gestion de paramètres externes comprenant un organe de mémoire, les filtres et les constantes de temps sont réalisés par voie numériques et intégrés sur un même substrat semi-conducteur pour constituer une puce unique programmable.

Ainsi, on a constaté qu'il était possible de réduire de façon considérable le nombre de composants externes, voire même de supprimer totalement les composants électroniques externes et de réduire de façon correspondante le nombre de broches de la puce, par exemple de faire passer le nombre de broche de quarante quatre à vingt quatre seulement. En outre, l'introduction des paramètres externes sous forme programmable permet une adaptation extrêmement rapide d'un poste téléphonique à une nouvelle conformation de réseau par une phase de modification de programmation.

Selon un aspect avantageux de l'invention, le transmetteur et le récepteur sont réalisés selon une technologie bipolaire associée à des filtres à capacité commutée.

Selon un autre aspect avantageux de l'invention, l'organe de mémoire de l'organe de gestion des paramètres externes est une EEPROM ou tout autre technologie programmable et effaçable électriquement.

Selon encore un autre aspect avantageux de l'invention, le poste téléphonique comporte une sonnerie sur haut parleur alimentée par une alimentation à découpage.

De façon plus particulière, la puce unique programmable effectue des traitements qui se divisent entre un traitement analogique et un traitement numérique. Le traitement analogique comprend le transmetteur comportant lui-même un préampli micro réalisé par une technologie bipolaire et un filtrage-gain réalisé par des capacités commutées. Le récepteur comporte également un organe de filtrage-gain réalisé par des capacités commutées et un ampli écouteur réalisé selon la technologie bipolaire. L'écoute amplifiée est assurée par un ampli de puissance réalisée selon la technologie bipolaire associée à un organe à gain programmable comportant d'une part une conversion analogique/numérique et une programmation numérique interne des seuils, gains et constantes de temps dans la mémoire EEPROM.

De préférence l'écoute amplifiée comporte également un antilocal réalisé au moyen de capacités commutées.

La fonction main libre du poste téléphonique comprend un organe de préamplification micro et un compresseur réalisé selon la technologie bipolaire, des filtres réalisés au moyen de capacités commutées, les constantes de temps étant assurées par un micro-contrôleur standard intégré à la puce. Les fonctions habituelles anti-larsen, anti- distorsion, anti-tintement, anti-rebond clavier et d'adaptation d'impédance en fonction de la longueur de la ligne sont assurées par programmation dans le micro-contrôleur en association avec un convertisseur analogique/ numérique.

Le traitement numérique comprend en particulier la numérotation qui est assurée par une logique CMOS tandis que la gestion temps/clavier est assurée par le micro-contrôleur intégré. Le micro-contrôleur assure également la fonction de BUS série afin d'assurer un interface bidirectionnel.

Parmi les paramètres d'utilisateurs, l'agenda est réalisé en associant le micro-contrôleur à la mémoire EEPROM, tandis que les mélodies de la sonnerie sont réalisées en utilisant la technologie CMOS.

Bien entendu l'invention n'est pas limitée au mode de réalisation décrit et on peut y apporter des variantes de réalisation sans sortir du cadre de l'invention. En particulier, les adaptations à différentes conformations de réseau peuvent être obtenues en introduisant un jeu d'instructions particulier pour chaque application ou au contraire en activant des instructions standard à partir d'un jeu d'instructions installées initialement au coeur du micro-contrôleur.

## Revendications

1. Poste téléphonique comportant un clavier, un interface de clavier, un écouteur, un micro, un transmetteur, un récepteur, un organe de numérotation, un organe de gestion interne, des organes d'adaptation de paramètres externes, des filtres et constantes de temps, caractérisé en ce que le transmetteur, le récepteur, l'organe de numérotation, l'organe de gestion interne, un organe de gestion de paramètres externes comprenant un organe de mémoire, les filtres et les constantes de temps sont réalisés par voie numérique et intégrés sur un même substrat semi-conducteur pour constituer une puce unique programmable.

2. Poste téléphonique selon la revendication 1, caractérisé en ce que le transmetteur et le récepteur sont réalisés selon une technologie bipolaire associée à des filtres à capacité commutée.

3. Poste téléphonique selon la revendication 1 ou la revendication 2, caractérisé en ce que l'organe de mémoire de l'organe de gestion de paramètres externes est une EEPROM.

4. Poste téléphonique selon l'une des revendications 1 à 3, caractérisé en ce qu'il comporte une sonnerie sur haut-parleur alimentée par une alimentation à découpage.

## Patentansprüche

1. Fernsprechapparat mit einer Tastatur, einer Tastatur-Schnittstelle, einem Hörer, einem Mikrophon, einem Sender, einem Empfänger, einem Selbstwählelement, einem internen Verwaltungselement, mit Elementen zur Anpassung externer Parameter, Filtern und Zeitkonstanten, dadurch gekennzeichnet, daß der Sender, der Empfänger, das Selbstwählelement, das interne Verwaltungselement, ein ein Speicherelement aufweisendes Element zur Verwaltung externer Parameter, die Filter und die Zeitkonstanten digital realisiert ausgebildet und auf einem gleichen Halbleitersubstrat integriert sind, um einen einzigen programmierbaren Chip zu bilden.

2. Fernsprechapparat nach Anspruch 1, dadurch gekenn- zeichnet, daß der Sender und der Empfänger in Bipolartechnik ausgeführt sind, die mit Filtern mit schaltbarer Kapazität verbunden ist.

3. Fernsprechapparat nach Anspruch 1 oder 2, dadurch gekennzeichnet, daß das Speicherelement des Elements zur Verwaltung externer Parameter ein EEPROM ist.

4. Fernsprechapparat nach einem der Ansprüche 1 bis 3, gekennzeichnet durch ein Lautsprecher-Läutewerk, das durch eine impulsförmig arbeitende Stromversorgung gespeist wird.

## Claims

1. A telephone set comprising a keypad, a keypad interface, an earpiece, a microphone, a transmitter, a receiver, a numbering member, an internal management member, members for adaptation of external parameters, filters and time constants, characterised in that the transmitter, the receiver, the numbering member, the internal management member, a member for management of external parameters comprising a memory member, the filters and the time constants are provided digitally and integrated on the same semiconductor substrate to constitute a single programmable chip.

2. A telephone set according to claim 1 characterised in that the transmitter and the receiver are produced using a bipolar technology associated with switched-capacitor filters.

3. A telephone set according to claim 1 or claim 2 characterised in that the memory member of the member for management of external parameters is an EEPROM.

4. A telephone set according to one of claims 1 to 3 characterised in that it comprises a loudspeaker ringing means powered by a supply with cut-off effect.
